# EUROPEAN PATENT SPECIFICATION

(11) **EP 1 998 128 B1**
(45) Date of publication and mention of the grant of the patent: **27.02.2013**
(21) Application number: 07380152.4
(22) Date of filing: 29.05.2007
(51) Int. Cl.: F26B 5/04, F26B 23/00

(54) **System for organic substances dehydration at low temperature and vacuum conditions**
System zur Entwässerung von organischen Stoffen unter niedrigen Temperatur- und Druckbedingungen
Système de déshydratation de substances organiques sous des conditions de basse température et à vide

(43) Date of publication of application: 03.12.2008
(73) Proprietor: Lealesa Quality SL, 08021 Barcelona (Barcelona) (ES); Sociedad Cientifica de Peritos L-Tron, Moscú (RU)
(72) Inventor: Kovalév, L. K. Lealesa Quality, SL, 08021 Barcelona (ES); Kovaléva, N.L. Lealesa Quality SL, 08021 Barcelona (ES)
(74) Representative: Gislon, Gabriele

(56) References cited:
- EP-A- 0 641 589
- DE-A1- 1 729 226
- DE-U1- 9 214 670
- US-A- 2 823 742
- US-A- 3 326 266
- US-A- 4 330 946
- US-A- 4 407 140
- US-A- 4 424 633
- US-A- 4 583 301
- US-A- 5 353 519
- US-A- 5 570 516

## Description

### Field of the Art

The present invention generally relates to a system which can be used for processes for dehydrating and drying under vacuum, and particularly to a system for treating and using different types of biomass, agricultural waste products, porcine and poultry farm waste, as well as products for food, medicine, microbiology and other branches of the industry.

### Prior State of the Art

Patent document RU no. 2150058 describes a system for dehydrating organic substances at low temperatures under vacuum, comprising a vacuum chamber in which a series of heat exchangers are located in floors, which exchangers are constructed as discs with scrapers between which hollow discs with tubular channels are installed for the circulation of a heat carrying fluid.

The drawbacks of such system are the relatively low efficiency of the heat exchangers determined by the occurrence of important heat losses and also by the absence of the use of heat, caused by the steam discharge from the evaporated moisture.

On the other hand, patent document RU no. 2246079, which is the closest state of the art, proposes a system for dehydrating materials at low temperatures under vacuum, comprising a vacuum chamber with heat exchangers for heating the initial matter, an inlet for loading the initial matter to the vacuum chamber and an outlet for unloading the dry product, a vacuum pump for removing air from the vacuum chamber, an output heat exchanger joined to an outlet of the vacuum chamber for condensing the steam resulting from the dehydration of the initial matter and a tank for collecting said condensed steam. The system proposed in said patent document RU no. 2246079 also has an input heat exchanger joined to a primary heat source and to said heat exchangers of the vacuum chamber to provide a heat carrying fluid to said heat exchangers.

The drawbacks of said system is the relatively low technological efficiency of the process for dehydrating the initial products as well as the lack of an efficient use of the heat released by the steam resulting from the evaporation of the moisture of the initial matter.

US 5353519 refers to a vacuum drying equipment for refuse or the like whereby a material to be dried such as, for example refuse and the like, which has been introduced into a drying vessel can be substantially prevented from rotting until a drying treatment is started. This vacuum drying equipment is then suitable for dehydrating organic substances at low temperatures under vacuum and comprises all the features of the preamble of claim 1.

### Description of the Invention

It is necessary to offer an alternative to the state of the art which covers the gaps therein, by means of providing a system for dehydrating materials at low temperatures under vacuum which, compared to the systems known and mentioned above, allows obtaining a decrease as regards energy consumption, an increase of the efficiency of the dehydration process at low temperatures and an increase of the productivity of the system in its operation.

To that end, the present invention relates to a system for dehydrating at low temperatures under vacuum, comprising:
- heat exchangers for heating initial matter to be dehydrated,
- an inlet for introducing said initial matter in said vacuum chamber on said heat exchangers,
- a first outlet for unloading the dry end product resulting from the dehydration of the initial matter,
- a second outlet for discharging the steam resulting from the dehydration of the initial matter,
- a vacuum pump for removing air from the vacuum chamber,
- an input heat generating system joined to said heat exchangers of the vacuum chamber to provide heat to a heat carrying fluid circulating through the heat exchangers of the vacuum chamber,
- an output heat exchanger joined to the vacuum chamber through said second outlet to condense the steam coming out of said vacuum chamber, and
- at least one tank joined to said output heat exchanger for collecting said condensed steam.

The system proposed by the invention is characterized in that it further comprises a preliminary heat exchanger connected to said output heat exchanger and a tank of initial matter, to preliminarily heat said initial matter when it is circulated in a direction from said tank to said inlet of the vacuum chamber, thanks to the heat transfer obtained when hot water coming from said output heat exchanger through a hot pipe is circulated through said preliminary heat exchanger in a direction opposite to that of said initial matter.

Conventional systems only comprise a tank for collecting condensed steam coming out of the output heat exchanger, which makes it necessary to interrupt this process once said tank is full until it is at least partly emptied.

For the purpose of solving this drawback and enabling a continuous operation of the system, without needing to carry out said interruptions, the system proposed by an embodiment of the present invention comprises several tanks for collecting condensed steam connected in parallel with the output heat exchanger, through respective valves, with the vacuum pump and with a pump for discharging the condensed steam.

As regards the mentioned input heat generating system, the system comprises a primary heat source joined to an input heat exchanger, which is joined to said heat exchangers of the vacuum chamber to transfer the heat obtained from the heat source to said fluid circulating through such exchangers.

The proposed system comprises a heat pump with:
- an evaporator adapted to cool water circulating around it coming from an outlet pipe of the preliminary heat exchanger and directed, by means of a pump, towards a cold pipe of the output heat exchanger, said pipes being connected to a chamber of said heat pump containing said evaporator,
- a condenser adapted to heat a fluid circulating around it and through said input heat exchanger, such that said condenser acts as an additional heat source for collaborating with said primary heat source, said input heat exchanger being connected to a chamber of said heat pump containing said condenser, and
- a compressor adapted to compensate heat losses in the system.

By means of the heat pump proposed by the invention with the described connections thereof with the output heat exchanger, the preliminary heat exchanger and the input heat exchanger, a high efficiency in the system is obtained, using the heat contained in the steam which is the product of the evaporation of the moisture of the initial matter in order to obtain, in collaboration with the heat pump, the mentioned additional heat source used to dehydrate the initial matter, as well as to cool the water coming out of the output heat exchanger.

For one embodiment, the additional heat source is adapted to also supply heat to another system or systems for dehydrating at low temperatures under vacuum, for which the mentioned chamber of the heat pump containing said condenser can be connected through pipes to a second system for dehydrating, generally to an input heat exchanger of said second system for dehydrating at low temperatures under vacuum, preferably by means of valves.

By means of the characteristic elements of the system proposed by the invention, especially the preliminary heat exchanger and the tanks for collecting the condensed steam arranged in parallel, it is achieved that the system operates according to a continuous cycle for carrying out the dehydration process, that the thermal energy of the steam resulting from the moisture of the initial matter is used, and therefore the efficiency and the productivity of the dehydration process is increased and the specific energy consumption of the process is reduced.

### Brief Description of the Drawings

The previous and other advantages and features will be more fully understood from the following detailed description of some embodiments with reference to the attached drawing, which must be taken by way of a non-limiting illustration, in which:

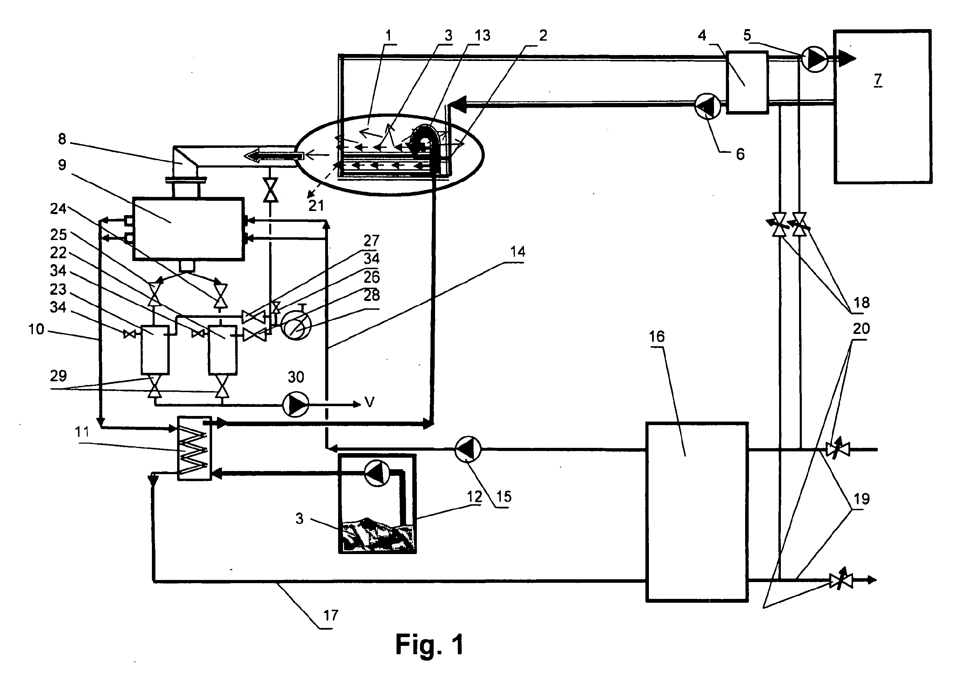

Figure 1 shows, by means of a schematic diagram, the system for dehydrating at low temperatures under vacuum proposed by the invention.

### Detailed Description of some Embodiments

With reference to Figure 1, the latter shows how the present invention relates to a system for dehydrating at low temperatures under vacuum, comprising:
- a vacuum chamber 1 with:
   - heat exchangers 2 for heating initial matter 3 to be dehydrated,
   - an inlet 13 for introducing said initial matter 3 in said vacuum chamber I on said heat exchangers 2,
   - a first outlet 21 for unloading the dry end product,
   - a second outlet 8 for discharging the steam resulting from the dehydration of the initial matter 3,
- a vacuum pump 28 for removing air from the vacuum chamber 1,
- a heat generating system comprising, for the embodiment shown, an input heat exchanger 4 joined to a primary heat source 7 (such as a boiler, exhaust steam or hot water coming from other processes) and to said heat exchangers 2, to provide heat to a fluid circulating therethrough,
   - an output heat exchanger 9 connected to the vacuum chamber I through said second outlet 8 to condense the steam coming out there from,
   - tanks 22, 23 joined to said output heat exchanger 9 for collecting said condensed steam, and
   - a preliminary heat exchanger 11 connected to said output heat exchanger 9 and to a tank 12 of initial matter 3, to preliminarily heat said initial matter 3 when it is circulated in a direction from said tank 12 to said inlet 13 of the vacuum chamber 1, thanks to the heat transfer obtained when hot water coming from said output heat exchanger 9 through a hot pipe 10 is circulated through said preliminary heat exchanger 11 in a direction opposite to that of the circulation of said initial matter 3.

As can be seen in Figure 1, the system proposed by the invention comprises, for the embodiment shown, two of said tanks 22, 23 for collecting condensed steam, connected in parallel to the output heat exchanger 9 through respective valves 24, 25, to the vacuum pump 28 and to a pump 30 for the discharge V of condensed steam.

Continuing with said Figure 1, the latter shows that the system proposed by the invention comprises a heat pump 16 internally comprising an evaporator, a compressor and a condenser (not shown):
- said evaporator being adapted to cool water circulating around it coming from an outlet pipe 17 of the preliminary heat exchanger 11 and directed, by means of a pump 15, towards a cold pipe 14 of the output heat exchanger 9, said pipes 17, 14 being connected to a chamber of said heat pump 16 containing said evaporator,
- said condenser being adapted to heat a fluid circulating around it and through said input heat exchanger 4, such that said condenser acts as an additional heat source for collaborating with or substituting said primary heat source 7, said input heat exchanger 4 being connected through valves 18 to a chamber of said heat pump 16 containing said condenser, and
- said compressor being adapted to compensate inevitable heat losses in the system.

For one embodiment, the chamber of said heat pump 16 containing said condenser can be connected through pipes 19 to at least a second system for dehydrating at low temperatures under vacuum. The pipes 19 can specifically be connected by means of valves 20 to an input heat exchanger, analogous to said input heat exchanger 4, of said second system for dehydrating at low temperatures under vacuum.

As regards the operation of the system, the initial matter 3 intended for dehydration is initially introduced in the vacuum chamber 1 through the inlet 13, by means of a loading mechanism for example, and deposited on planar surfaces of the heat exchangers 2. After pumping the vacuum chamber 1 with the vacuum pump 28 until obtaining a pressure lower than atmospheric pressure, the initial matter 3 is subjected to heating by means of circulating a heat carrying fluid through the inside of inner channels of the heat exchangers 2 (which will be described in detail hereinafter). Said heat carrying fluid is heated by the input heat exchanger 4 by means of the heat transfer generated by the primary heat source 7. The steam formed from the water contained in the initial matter 3 leaves the vacuum chamber I through the second outlet 8, or steam conduit 8, until reaching the output heat exchanger 9, where it condenses. By means of the actuation of valves 24, 25 interconnected in outlet ducts of the output heat exchanger 9, the condensed steam which has been formed in the output heat exchanger 9 fills one of the tanks 22, 23 in turns, which tanks are hermetic. Once one of the tanks 22, 23 is full, it is communicated with the atmosphere upon opening one of the valves 34, such that, in collaboration with the pump 30, the water contained therein is discharged to the outside. As regards the air contained in the other tank 22, 23 (the tank which is still hermetic since it has not been communicated with the atmosphere), it is removed by the vacuum pump 28 through the valves 26 or 27.

From the tank 12, the initial matter 3 is supplied to the preliminary heat exchanger 11, in which the initial matter 3 is heated to the evaporation temperature corresponding to the pressure in the vacuum chamber 1. The thus preliminarily heated initial matter 3 is delivered by a loading system to the surface of the heat exchangers 2 through the inlet 13.

The water which has entered cold through the pipe 14 to the output heat exchanger 9, and which has been heated upon circulating therethrough as a result of steam condensation, passes through the pipe 10 to the preliminary heat exchanger 11 of the initial matter 3 and then through the cold pipe 17 passes to the chamber of the evaporator of the heat pump 16, where it is cooled and, with the aid of the pump 15, returned to the output heat exchanger 9 through the pipe 14.

As regards the chamber containing the condenser of the heat pump 16, water is heated therein until a temperature of 80 up to 90°C, and it is sent to the inlet of the input heat exchanger 4 to collaborate with the primary heat source 7.

For one embodiment, and by means of an actuation on the valves 20, the water heated in the chamber of the condenser of the heat pump 16 is directed through the pipes 19 to the input heat exchangers of other systems working in parallel for the dehydration at low temperatures under vacuum.

As regards the characteristic parameters of the heat pump, they are chosen so that they allow heating the water in the condenser of the heat pump 16 to a temperature of 80 up to 90°C, a condensation temperature of the heat carrier in the heat pump 16 of 85 up to 95°C and the boiling temperature of the heat carrier in the heat pump 16 of 58 up to 60°C.

Therefore, the use of the preliminary heat exchanger 11 for preliminarily heating the initial matter 3, the use of the output heat exchanger 9 together with the hermetic tanks 22, 23 for collecting the steam condensed thereby, as well as the connection of the heat pump 16 with the preliminary heat exchanger 11, the outlet heat exchanger 9, and the inlet heat exchanger 4, allow the system to operate according to a continuous cycle to carry out the dehydration process and therefore increase the efficiency and productivity of the dehydration process and reduce the specific energy consumption of the process.

A person skilled in the art could introduce changes and modifications in the embodiments described without departing from the scope of the invention as it is defined in the attached claims.

## Claims

1. A system for dehydrating organic substances at low temperatures under vacuum, of the type comprising:
- a vacuum chamber (1) with:
- heat exchangers (2) for heating initial matter (3) to be dehydrated,
- an inlet (13) for introducing said initial matter (3) in said vacuum chamber (1) on or close to said heat exchangers (2),
- a first outlet (21) for unloading the dry end product resulting from the dehydration of the initial matter (3),
- a second outlet (8) for discharging the steam resulting from the dehydration of the initial matter (3),
- a vacuum pump (28) for removing air from the vacuum chamber (1),
- an input heat generating system (4, 7) connected to said heat exchangers (2) of the vacuum chamber (1) to provide heat to a fluid circulating through the heat exchangers (2), said input heat generating system (4, 7) comprising a primary heat source (7) joined to an input heat exchanger (4), which is joined to said heat exchangers (2) of the vacuum chamber (1) to provide heat to said fluid circulating through the heat exchangers (2);
- an output heat exchanger (9) connected to the vacuum chamber (1) through said second outlet (8) to condense the steam coming out there from,
- at least one tank (22) joined to said output heat exchanger (9) for collecting said condensed steam,
- a heat pump (16) with:
- an evaporator adapted to cool water circulating around it coming from a hot pipe (10) of the output heat exchanger (9) and directed, by means of a pump (15), towards a cold pipe (14) of the output heat exchanger (9), said pipes (10, 14) being connected to a chamber of said heat pump (16) containing said evaporator,
- a condenser adapted to heat a fluid circulating around it and through said input heat exchanger (4), said input heat exchanger (4) being connected to a chamber of said heat pump (16) containing said condenser, and
- a compressor adapted to compensate heat losses in the system,
**characterized in that** it further comprises
- a tank (12) of initial matter (3), and
- a preliminary heat exchanger (11),
said preliminary heat exchanger (11) being connected
- through a hot pipe (10) to said output heat exchanger (9) making water circulate from a first inlet to a first outlet of the preliminary heart exchanger (11) in a first direction to an outlet pipe (17) of the preliminary heat exchanger (11), and
- to said tank (12) to drive the initial matter (3) there contained between a second inlet and a second outlet of the preliminary heat exchanger (11) in a direction opposite to said first direction, to preliminarily heat it before its transfer to the vacuum chamber (1) through said inlet (13),
whereby said condenser of said heat pump act as an additional heat source for collaborating with said primary heat source (7).

2. A system according to claim 1, **characterized in that** said chamber of said heat pump (16) containing said condenser at least partly can be connected through pipes (19) to at least one second system for dehydrating at low temperatures under vacuum.

3. A system according to claim 2, **characterized in that** said pipes (19) can be connected to an input heat exchanger, analogous to said input heat exchanger (4), of said at least one second system for dehydrating at low temperatures under vacuum.

4. A system according to claim 3, **characterized in that** said pipes (19) can be connected to said input heat exchanger of said second system by means of valves (20).

5. A system according to any of the previous claims, **characterized in that** it comprises at least one second tank (23) joined to said output heat exchanger (9) for collecting said condensed steam, both tanks (22, 23) being connected in parallel to the output heat exchanger (9) through respective valves (24, 25), to the vacuum pump (28) and to a pump (30) for the discharge (V) of the condensed steam, which allow an uninterrupted operation.

## Patentansprüche

1. System zum Dehydratisieren von organischen Stoffen bei niedrigen Temperaturen unter Vakuum, der Art umfassend:
- eine Vakuumkammer (1) mit:
- Wärmetauschern (2) zum Erwärmen eines zu dehydratisierenden Ausgangsmaterials (3),
- einem Eintritt (13) zum Einführen des genannten Ausgangsmaterials (3) in die genannte Vakuumkammer (1) auf oder in der Nähe von den genannten Wärmetauschern (2),
- einem ersten Austritt (21) zum Entladen des trockenen Endprodukts, welches sich aus der Dehydratisierung des Ausgangsmaterials (3) ergibt,
- einem zweiten Austritt (8) zum Abgeben des Dampfes, welcher sich aus der Dehydratisierung des Ausgangsmaterials (3) ergibt,
- eine Vakuumpumpe (28) zum Entfernen der Luft aus der Vakuumkammer (1),
- ein Erzeugungssystem (4, 7) für Eintragswärme, welches mit den genannten Wärmetauschern (2) der Vakuumkammer (1) angeschlossen ist, um Wärme für ein Fluid bereitzustellen, welches durch die Wärmetauscher (2) strömt, wobei das genannte Erzeugungssystem (4, 7) für Eintragswärme eine primäre Wärmequelle (7) umfasst, welche mit einem Tauscher (4) für Eintragswärme verbunden ist, welcher mit den genannten Wärmetauschern (2) der Vakuumkammer (1) verbunden ist, um Wärme für das genannte Fluid bereitzustellen, welches durch die Wärmetauscher (2) strömt;
- einen Tauscher (9) für Austragswärme, welcher mit der Vakuumkammer (1) durch den genannten zweiten Austritt (8) angeschlossen ist, um den aus demselben kommenden Dampf zu kondensieren,
- zumindest einen Behälter (22), welcher mit dem genannten Tauscher (9) für Austragswärme verbunden ist, um den genannten kondensierten Dampf zu sammeln,
- eine Wärmepumpe (16) mit:
- einem Verdampfer, welcher zum Abkühlen des Wassers angepasst ist, welches um denselben strömt und von einer warmen Leitung (10) des Tauschers (9) für Austragswärme kommt und welches mittels einer Pumpe (15) zu einer kalten Leitung (14) des Tauschers (9) für Austragswärme gerichtet wird, wobei die genannten Leitungen (10, 14) mit einer Kammer der genannten Wärmepumpe (16), welche den genannten Verdampfer enthält, angeschlossen sind,
- einem Kondensator, welcher zum Erwärmen eines Fluids angepasst ist, welches um denselben und durch den genannten Tauscher (4) für Eintragswärme strömt, wobei der genannte Tauscher (4) für Eintragswärme mit einer Kammer der genannten Wärmepumpe (16), welche den genannten Kondensator enthält, angeschlossen ist, und
- einem Kompressor, welcher zum Ausgleichen von Wärmeverlusten in dem System angepasst ist,
**dadurch gekennzeichnet, dass** es zusätzlich Folgendes umfasst
- einen Behälter (12) für Ausgangsmaterial (3), und
- einen vorläufigen Wärmetauscher (11),
wobei der genannte vorläufige Wärmetauscher (11)
- durch eine warme Leitung (10) mit dem genannten Tauscher (9) für Austragswärme angeschlossen ist, wobei das Wasser von einem ersten Eintritt zu einem ersten Austritt des vorläufigen Wärmetauschers (11) in einer ersten Richtung zu einer Austrittsleitung (17) des vorläufigen Wärmetauschers (11) zum Strömen kommt, und
- mit dem genannten Behälter (12) angeschlossen ist, um das in demselben enthaltene Ausgangsmaterial (3) zwischen einem zweiten Eintritt und einem zweiten Austritt des vorläufigen Wärmetauschers (11) in einer zur genannten ersten Richtung entgegengesetzten Richtung zu bewegen, um es vorläufig vor seiner Übertragung zur Vakuumkammer (1) durch den genannten Eintritt (13) zu erwärmen,
wodurch der genannte Kondensator der genannten Wärmepumpe als zusätzliche Wärmequelle wirkt, um mit der genannten primären Wärmequelle (7) zusammenzuarbeiten.

2. System nach Anspruch 1, **dadurch gekennzeichnet, dass** die genannte Kammer der genannten Wärmepumpe (16), welche den genannten Kondensator enthält, zumindest teilweise durch Leitungen (19) mit zumindest einem zweiten System zum Dehydratisieren bei niedrigen Temperaturen unter Vakuum angeschlossen werden kann.

3. System nach Anspruch 2, **dadurch gekennzeichnet, dass** die genannten Leitungen (19) mit einem Tauscher für Eintragswärme angeschlossen werden können, welcher analog zu dem genannten Tauscher (4) für Eintragswärme ist, von dem genannten zumindest einen zweiten System zum Dehydratisieren bei niedrigen Temperaturen unter Vakuum.

4. System nach Anspruch 3, **dadurch gekennzeichnet, dass** die genannten Leitungen (19) mit dem genannten Tauscher für Eintragswärme des genannten zweiten Systems mittels Ventilen (20) angeschlossen werden können.

5. System nach einem der vorstehenden Ansprüche, **dadurch gekennzeichnet, dass** es zumindest einen zweiten Behälter (23) umfasst, welcher mit dem genannten Tauscher (9) für Austragswärme zum Sammeln des genannten kondensierten Dampfes verbunden ist, wobei beide Behälter (22, 23) parallel mit dem Tauscher (9) für Austragswärme durch jeweilige Ventile (24, 25), mit der Vakuumpumpe (28) und mit einer Pumpe (30) für die Abgabe (V) von dem kondensierten Dampf angeschlossen sind, was einen zügigen Betrieb ermöglicht.

## Revendications

1. Un système pour déshydrater des substances organiques à faibles températures, sous vide, du genre comportant:
- une chambre à vide (1) ayant:
- des échangeurs de chaleur (2) pour chauffer la matière initiale (3) à déshydrater,
- une entrée (13) pour introduire cette matière initiale (3) dans cette chambre à vide (1) dans ou près des échangeurs de chaleur (2),
- une première sortie (21) pour décharger le produit sec final résultant de la déshydratation de la matière initiale (3),
- une deuxième sortie (8) pour décharger la vapeur résultant de la déshydratation de la matière initiale (3),
- une pompe à vide (28) pour extraire l'air de la chambre à vide (1),
- un système générateur de chaleur d'entrée (4,7) relié à ces échangeurs de chaleur (2) de la chambre à vide (1) pour fournir de la chaleur à un fluide circulant à travers les échangeurs de chaleur (2), ce système générateur de chaleur d'entrée (4,7) comportant une source de chaleur primaire (7) unie à un échangeur de chaleur d'entrée (4), qui est unie à ces échangeurs de chaleur (2) de la chambre à vide (1) pour fournir de la chaleur à ce fluide circulant à travers les échangeurs de chaleur (2);
- un échangeur de chaleur de sortie (9) relié à la chambre à vide (1) à travers cette deuxième sortie (8) pour condenser la vapeur provenant de celle-ci,
- au moins un réservoir (22) uni à cet échangeur de chaleur de sortie (9) pour recueillir cette vapeur condensée.
- une pompe à chaleur (16) ayant:
- un évaporateur pour refroidir l'eau circulant autour d'elle provenant d'un tuyau chaud (10) de l'échangeur de chaleur de sortie (9) et dirigé, au moyen d'un pompe (15), vers un tuyau froid (14) de l'échangeur de chaleur de sortie (9), ces tuyaux (/10,14) étant reliés à une chambre de cette pompe à chaleur (16) contenant cet évaporateur,
- un condensateur adapté pour chauffer le fluide circulant autour et à travers cet échangeur de chaleur d'entrée (4), cet échangeur de chaleur d'entrée (4) étant relié à une chambre de cette pompe à chaleur (16) contenant ce condensateur, et
- un compresseur adapté pour compenser les pertes de chaleur dans le système,
**caractérisé en ce qu'**il comprend en plus:
- un réservoir (12) de la matière initiale (3) et
- un échangeur de chaleur préliminaire (11),
cet échangeur de chaleur préliminaire (11) étant relié
- à travers un tuyau chaud (10) à cet échangeur de chaleur de sortie (9) qui fait que l'eau circule d'une première entrée à une première sortie de l'échangeur de chaleur préliminaire (11) dans un premier sens à un tuyau de sortie (17) de l'échangeur de chaleur préliminaire (11), et
- à ce réservoir (12) pour acheminer la matière initiale (3) qu'il contient entre une deuxième entrée et une deuxième sortie de l'échangeur de chaleur préliminaire (11) en sens inverse à ce premier sens, pour la chauffer de façon préliminaire avant son transfert à la chambre à vide (1) à travers cette entrée (13),
dans lequel ce condensateur de cette pompe à chaleur agit comme une source de chaleur complémentaire pour collaborer avec cette source de chaleur primaire (7).

2. Un système conformément à la revendication 1, **caractérisé en ce que** cette chambre de cette pompe à chaleur (16) contenant ce condensateur au moins en partie peut être reliée à travers les tuyaux (19) au moins à un deuxième système pour déshydrater à faibles températures sous vide.

3. Un système conformément à la revendication 2, **caractérisé en ce que** ces tuyaux (19) peuvent être reliés à un échangeur de chaleur d'entrée, analogue à cet échangeur de chaleur d'entrée (4) de cet au moins un deuxième système pour déshydrater à faibles températures sous vide.

4. Un système conformément à la revendication 3, **caractérisé en ce que** ces tuyaux (19) peuvent être reliés à cet échangeur de chaleur d'entrée de ce deuxième système au moyen de soupapes (20).

5. Un système conformément à une quelconque des revendications précédentes, **caractérisé en ce qu'**il comporte au moins un deuxième réservoir (23) uni à cet échangeur de chaleur de sortie (9) pour recueillir cette vapeur concentrée, les deux réservoirs (22,23) étant connectés en parallèle à l'échangeur de chaleur de sortie (9) à travers les soupapes respectives (24. 25), à la pompe à vide (28) et à une pompe (30) pour le déversement (V) de la vapeur condensée, ce qui permet un fonctionnement sans interruptions.
